# EUROPÄISCHE PATENTANMELDUNG

(11) **EP 0 926 025 A2**
(43) Veröffentlichungstag der Anmeldung: **30.06.1999**
(21) Anmeldenummer: 98119955.7
(22) Anmeldetag: 21.10.1998
(51) Int. Cl.: B60S 1/08

(54) **Schaltungsanordnung zur Geschwindigkeitsreduzierung im Umkehrbereich eines Scheibenwischers mit einem in seiner Pulsweite gesteuerten Motor**

(30) Priorität: 21.10.1997 DE 19746375
(71) Anmelder: SWF Auto-Electric GmbH, D-74321 Bietigheim-Bissingen (DE)
(72) Erfinder: Högler, Eberhard, 74391 Erligheim (DE)
(74) Vertreter: Dreiss, Fuhlendorf, Steimle & Becker

(57) **Zusammenfassung**

Die Erfindung betrifft eine Motoransteuerung, bei der der Motor im Umkehrbereich des Scheibenwischers in seiner Geschwindigkeit reduziert wird. Um diese Wischart besonders einfach und preiswert zu erreichen, wird gemäß der Erfindung ein in seiner Impulsweite gesteuerter, reversierbarer Motor eingesetzt. Vorteilhafte Weiterbildungen der Erfindung beschäftigen sich mit der Bestimmung der Lage des Wischers, insbesondere der Umkehrposition und der Parkposition.

## Beschreibung

Die Erfindung betrifft das Problem der Realisierung einer Steuerung für einen Wischermotor (Rundläufer, Nutzfahrzeuge, der kurz vor dem Erreichen der Umkehrpunkte der Wischarme abdämpft bzw. mit verringerter Geschwindigkeit durch die Umkehrpunkte fährt und danach wieder beschleunigt. Der gewünschte Arbeitsablauf ist aus der DE-OS 40 39 038 bekannt.

Gelöst wird das Problem mit Hilfe eines Wischermotors, der mit Pulsweitenmodulation (PWM) angesteuert wird und kurz vor dem Umkehrpunkt abgebremst und gestoppt wird. Die Art der Sensoren, Abbremsung und Regelung im einzelnen oder absolut für reversierende Motoren in den Anmeldungen mit dem amtlichen Az. 196 34 559 und 1976 32 520 (P 8776, P 9069) beschrieben.

Aufgabe der Erfindung ist es, die gewünschte Arbeitsweise gemäß der DE-OS 40 39 038 mittels eines nicht reversierenden, durch Impulsweitenmodulation (PWM) gesteuerten Motors zu verwirklichen.

Die Erfindung wird im Prinzip dadurch gelöst, daß der Motor in den Umkehrpunkten nicht stoppt, sondern nur abbremst und mit verringerter Geschwindigkeit weiterdreht und nach den Umkehrpunkten wieder auf seine Solldrehzahl beschleunigt, ohne selbst seine Drehrichtung zu ändern.

Da der Motor mit Pulsweitenmodulation angesteuert wird, ist auch eine Einstellung jeder beliebigen Drehzahl (innerhalb eines bestimmten Bereichs möglich, so daß der Motor durch eine Last nicht stehenbleibt). So kann zwischen Stufe 1 und Stufe 2 jede beliebige Motordrehzahl eingestellt werden, z.B. über ein geeignetes Steuer/Sensorsignal.

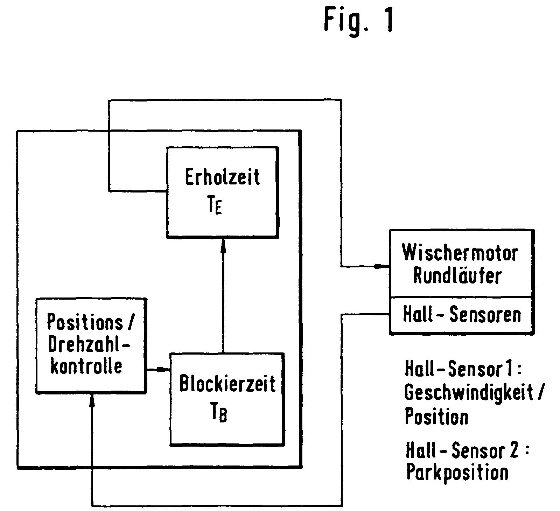

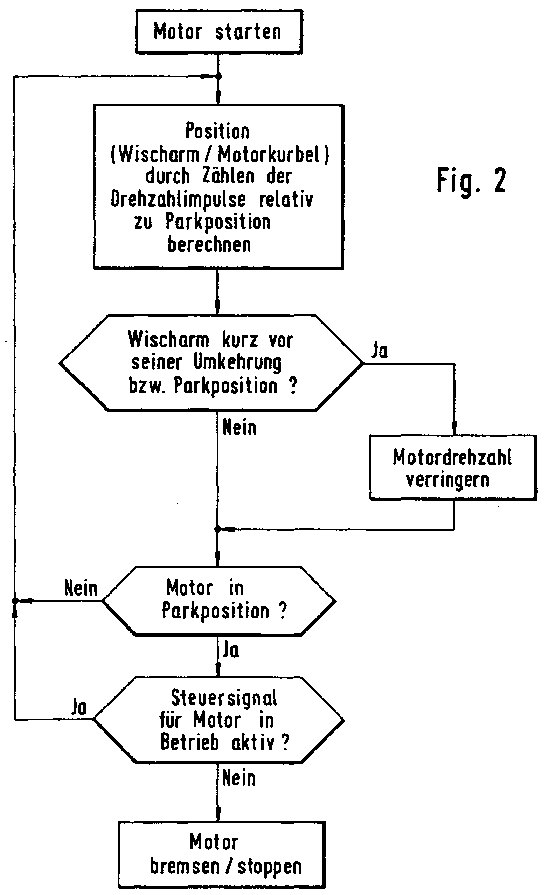

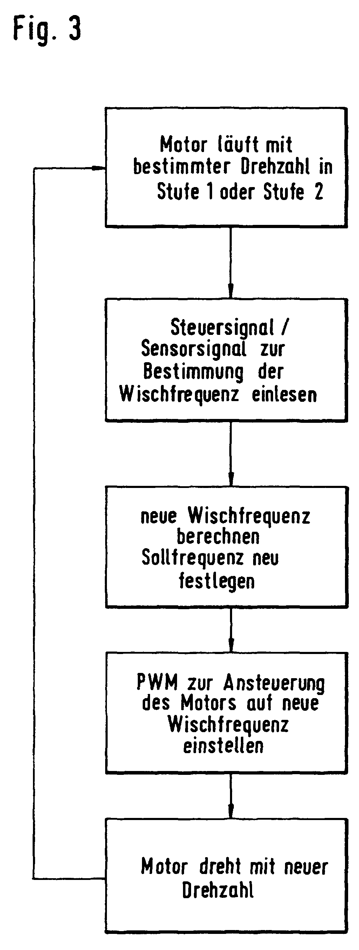

Ein Ausführungsbeispiel der Erfindung wird nachfolgend im Zusammenhang mit den Fig. 1 bis 3 beschrieben.

Der Wischermotor wird in einer Wischanlage über eine elektronische Steuerung betrieben. Der Motor ist mit einem Positionssensorsystem ausgestattet. Das Positionssensorsystem kann durch zwei Arten realisiert werden, und zwar einmal durch Hall-Sensoren für die Parkposition (Magnet auf dem Getrieberad) und zum anderen einem Hall-Sensor für die Drehzahl bzw. Drehwinkel der Antriebswelle relativ zur Parkposition (Magnet auf der Anfahrwelle). Die zweite Möglichkeit des Positionssystems ist ein absoluter Positionssensor, der den Drehwinkel der Antriebswelle angibt.

Aus dem Drehwinkel der Antriebswelle und Drehrichtung des Motors kann der Drehwinkel der Wischachse (Wischwinkel) in der Wischanlage und somit die Position des Wischblattes/Wischarms ermittelt werden. Der Motor kann durch PWM-Ansteuerung (Pulsweitenmodulation) in seiner Geschwindigkeit variiert werden und wird vor dem Erreichen der Umkehrpositionen kontinuierlich oder in Stufen auf eine niedrigere

Geschwindigkeit als die Sollgeschwindigkeit herabgebremst, so daß mit geringer Geschwindigkeit in die Umnkehrposition durchfahren wird.

Der Motor wird in seiner Drehzahl geregelt, so daß die Wischfrequenz lastunabhängig is. Zusätzlich soll über die PWM-Ansteuerung und ein geeignetes Steuersignal eine kontinuierliche Änderung der Wischfrequenz möglich sein, so daß es nicht nur wie bisher zwei Wischfrequenzen (langsam/schnell) gibt, sondern auch Zwischenstufen möglich sind. Durch die Erfindung ergeben sich eine ganze Reihe von Vorteilen: Durch die Abbremsung läßt sich die gewünschte Umkehrposition präziser erreichen bzw. der Umkehrvorgang genauer wiederholen. Außerdem wird durch die niedrigere Geschwindigkeit in dem Umkehrbereich die Mechanik (Wischergestänge) entlastet. Der Wischvorgang läßt sich weiterhin verstetigen, so daß durch die Regelung ein gleichmäßigeres Wischen erreicht wird. Durch die kontinuierlich veränderbare Wischfrequenz ist eine optimale Anpassung des Wischvorgangs an die Scheibenverhältnisse möglich (z.B. Wassermenge auf Scheibe, Tachosignal).

Wird die Drehzahl des Motors zu gering bzw. kommt der Motor aufgrund der zu großen Belastung zum Stehen, so wird dieser nach Ablauf der Blockzeit (TB) abgeschaltet. Die Zeit TB ist nötig, damit der Motor bei einer sehr kurzen Überbelastung nicht schon abgeschaltet wird. Nach einer Erholzeit TB wird der Motor erneut eingeschaltet.

## Patentansprüche

1. Verwendung eines pulsweiten gesteuerten reversierbaren Motors für den Antrieb eines Scheibenwischers, bei dem in dem Umkehrbereich der Motor abgebremst und mit verringerter Geschwindigkeit weiterdreht und nach dem Durchlaufen des Umkehrpunktes des Wischers wieder auf seine Solldrehzahl beschleunigt.

2. Elektronisch über Pulsweitenmodulation gesteuerter Motor, bei dem der Motor über Signale angesteuert wird, die die Parkposition oder die Drehzahl des Motors bestimmen.

3. Motor nach einem der vorangegangenen Ansprüche mit einem Drehzahlsensor, der durch ein Hall-Sensor und einem Rundmagnet auf der Ankerwelle realisiert ist.

4. Motor nach einem der vorangegangenen Ansprüche, dadurch **gekennzeichnet,** daß die Parkposition mit Hilfe eines Hall-Sensors und einem Magneten auf dem Getrieberad bestimmt wird.

5. Motor nach einem der vorangegangenen Ansprüche, dadurch **gekennzeichnet,** daß der Absolutwert der Position (Parkposition) mit Hilfe eines absoluten Sensorelements auf der Antriebswelle bestimmt wird.

6. Motor nach einem der vorangegangenen Ansprüche, dadurch **gekennzeichnet,** daß die Drehzahl des Motors zum Erreichen der Parkposition und Umkehrposition des Wischarms in Stufen oder stufenlos reduziert wird.

7. Motor nach einem der vorangegangenen Ansprüche, dadurch **gekennzeichnet**, daß mittels eines geeigneten Steuersignals die Wischfrequenz/Motordrehzahl kontinuierlich und stufenlos geändert wird.

8. Motor nach einem der vorangegangenen Ansprüche, dadurch **gekennzeichnet**, daß die Drehzahlregelung des Motors und damit die Wischfrequenz lastunabhängig durchgeführt wird.
